(19) **Europäisches Patentamt**
**European Patent Office**
**Office européen des brevets**

(11) **EP 1 798 622 B1**

(12) **FASCICULE DE BREVET EUROPEEN**

(45) Date de publication et mention
de la délivrance du brevet:
**30.05.2018 Bulletin 2018/22**

(51) Int Cl.:
***G05D 1/12*** *(2006.01)*

(21) Numéro de dépôt: **06291978.2**

(22) Date de dépôt: **19.12.2006**

(54) **Procédé permettant d'assurer la navigation et/ou le guidage et/ou le pilotage d'un projectile vers un objectif et dispositif mettant en oeuvre un tel procédé**

Verfahren, das ein Absichern der Navigation und/oder der Lenkung und/oder der Steuerung eines Projektils zu einem Ziel ermöglicht, und Vorrichtung, die ein solches Verfahren einsetzt

Method providing the navigation and/or guidance of a projectile towards a target and device implementing said method

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.12.2005 FR 0513205**

(43) Date de publication de la demande:
**20.06.2007 Bulletin 2007/25**

(73) Titulaire: **NEXTER Munitions**
**78000 Versailles (FR)**

(72) Inventeur: **Rouger, Philippe**
**18000 Bourges (FR)**

(74) Mandataire: **Célanie, Christian**
**Cabinet Célanie**
**5 Avenue de Saint Cloud**
**B.P. 214**
**78002 Versailles Cedex (FR)**

(56) Documents cités:
**GB-A- 1 377 358          GB-A- 2 261 133**
**US-A1- 2005 040 280          US-B1- 6 573 486**

**Description**

Le domaine technique de l'invention est celui des procédés et dispositifs de navigation et/ou guidage et/ou pilotage d'un projectile vers une cible.

Le document US2005/0040280 décrit un dispositif de guidage multi détecteurs pour les projectiles ayant à subir de très fortes accélérations. Le but recherché dans ce brevet est de remplacer les centrales inertielles trop fragiles par des moyens pouvant résister au tir. Ce brevet ne décrit pas une mise en oeuvre de détecteurs magnétiques pour déterminer l'angle de roulis et/ou l'angle d'assiette du projectile à l'aide des valeurs du champ magnétique dans le repère projectile, d'une valeur du champ de référence et de la valeur d'azimut mémorisée. Dans ce brevet, les capteurs magnétiques sont associés à d'autres détecteurs et le mode de traitement des données n'est pas précisé.

Le brevet US-6573486 décrit un moyen de guidage pour projectile n'utilisant pas de gyromètre mais associant un capteur GPS et des accéléromètres. Aucun détecteur magnétique n'est mis en oeuvre dans ce brevet comme le propose l'invention.

D'autre part, les projectiles connus sont guidés vers leur cible par un dispositif de guidage qui élabore les ordres de correction en accélération à appliquer au projectile pour diriger celui ci vers la cible.

Ces ordres de correction sont utilisés ensuite par un dispositif de pilotage qui élabore les commandes à appliquer à des organes de pilotage afin d'assurer la correction souhaitée.

Pour que le guidage et le pilotage puissent être assurés correctement il est nécessaire de connaître le positionnement et l'attitude du projectile dans un repère terrestre.

Le plus souvent le positionnement du projectile est connu grâce à un dispositif de positionnement par satellite (plus connu sous l'acronyme anglo saxon "GPS" signifiant «Global Positioning System»).

Un tel dispositif permet au projectile de se localiser sur trajectoire. Par ailleurs le projectile reçoit avant tir une programmation qui lui donne les coordonnées de sa cible.

Il détermine alors lui-même sa position réelle en vol, et élabore, à l'aide des informations fournies par une unité de mesure inertielle embarquée et au moyen d'algorithmes appropriés, les ordres de commande destinés aux gouvernes.

Cette unité de mesure inertielle, comprend des accéléromètres et des gyromètres (ou gyroscopes), qui fournissent (dans un repère lié au projectile) les composantes du vecteur instantané de rotation et de l'accélération non gravitationnelle à laquelle est soumis le projectile.

Cette unité de mesure inertielle est mise en oeuvre pour connaître l'orientation du projectile et notamment déterminer les angles d'Euler permettant de passer d'un repère lié au projectile au repère fixe terrestre.

Elle permet également d'assurer le pilotage du projectile et de concourir à son guidage en fusionnant les données de cette unité avec celles fournies par le GPS.

Si une telle solution est bien adaptée aux projectiles de type missiles, elle est inutilisable pour les projectiles tirés canon en raison du manque de robustesse des gyromètres ou du coût trop élevé de ces composants de mesure

C'est le but de l'invention que de proposer un procédé de navigation et/ou de guidage et/ou de pilotage d'un projectile vers une cible ou un objectif et permettant de pallier de tels inconvénients.

Ainsi l'invention a pour objet un procédé permettant d'assurer la navigation et/ou le guidage et/ou le pilotage d'un projectile vers un objectif, procédé dans lequel on utilise un calcul de tout ou partie des angles d'Euler du projectile pour permettre la détermination de l'attitude et/ou la localisation du projectile dans un repère terrestre, procédé caractérisé en ce que :

on introduit avant tir dans une mémoire ou registre d'un calculateur du projectile au moins une valeur des trois composantes d'un champ magnétique de référence dans un repère terrestre fixe, direct et orthonormé, repère centré sur la position de tir et ayant un axe horizontal et un axe vertical, l'orientation du repère par rapport à la direction de l'objectif étant connue et fixée ou programmée,
on fixe par construction ou on programme avant tir dans une autre mémoire ou registre du calculateur, au moins une valeur d'angle d'azimut,
on réalise sur trajectoire au moins une mesure des trois composantes du champ magnétique dans un repère orthonormé lié au projectile,
on calcule sur trajectoire l'angle de roulis et/ou l'angle d'assiette à partir des valeurs de champ magnétique mesurées, du ou des valeurs du champ de référence et de la valeur d'angle d'azimut mémorisée pour la partie de trajectoire considérée.

Avantageusement le repère terrestre fixe sera choisi centré sur la position de tir et ayant un axe horizontal orienté en direction de l'objectif.

La valeur du champ magnétique de référence pourra être mesurée avant tir au niveau de la position de tir et introduite en mémoire, le calcul du ou des angles étant ensuite réalisé à partir de cette mesure.

On pourra calculer l'angle d'assiette $\theta$ à partir d'au moins une mesure de la composante $H_{PX}$ du champ magnétique suivant l'axe $X_P$ du projectile par la formule suivante :

$$H_{PX} - b\ \cos\theta - c\ \sin\theta = 0,$$

formule dans laquelle

b et c sont des coefficients qui sont fonctions des composantes $H_{MB0X}$, $H_{MB0Y}$ et $H_{MB0Z}$ du champ magnétique de référence dans le repère terrestre fixe telles que programmées avant tir et $\psi_n$ étant une valeur de l'angle d'azimut connue sur la partie de trajectoire considérée.

On pourra ensuite calculer l'angle de roulis $\varphi$ à partir du calcul de l'angle d'assiette et en utilisant au moins une mesure des composantes $H_{PY}$ et $H_{PZ}$ du champ magnétique suivant les axe $Y_P$ et $Z_P$ du projectile par la formule suivante :

$$\tan(\varphi)\ =\ \frac{H_{PY}.e - H_{PZ}.d}{H_{PY}.d + H_{PZ}.e}\quad \text{formule dans laquelle}$$

d et e étant des coefficients fonctions des composantes $H_{MB0X}$, $H_{MB0Y}$ et $H_{MB0Z}$ du champ magnétique de référence dans le repère terrestre fixe telles que programmées avant tir et des coefficients d'une matrice $M(\theta,\psi)$ de passage partiel du repère terrestre fixe au repère lié au projectile et ne faisant intervenir que les angles d'azimut et d'assiette.

Après calcul de l'angle de roulis $\varphi$ on procèdera avantageusement à une linéarisation de sa valeur.

Suivant un mode de réalisation, pour une phase de vol balistique, l'angle d'azimut $\psi_n = \psi_1$ sera fixé en mémoire ou programmé avant tir et correspondra à l'angle d'azimut donné au projectile lors du tir.

Suivant un autre mode de réalisation, pour une phase de vol piloté, l'angle d'azimut $\psi_n$ adopté pour la partie de trajectoire considérée sera une valeur qui sera mémorisée avant tir et incorporée dans une table de tir qui sera lue en relation avec une horloge décomptée à partir de l'instant de tir.

Suivant un autre mode de réalisation, pour une phase de vol piloté, l'angle d'azimut $\psi_n$ adopté pour la partie de trajectoire considérée sera une valeur qui sera calculée sur trajectoire à partir des coefficients aérodynamique du projectile, d'au moins une mesure de l'accélération et d'au moins une valeur fixée en mémoire ou programmée d'un angle d'azimut.

On pourra par ailleurs évaluer les composantes du vecteur instantané de rotation du projectile dans un repère lié au projectile à partir des valeurs des angles d'Euler calculées ainsi que de leurs dérivées en fonction du temps.

Avantageusement, afin de corriger les mesures de champ magnétique d'une partie des perturbations apportées par l'environnement des capteurs, on pourra procéder à au moins une correction pendant une phase ayant un angle d'azimut stable, correction comprenant une mesure d'un écart entre le champ magnétique théorique et le champ magnétique mesurée.

Pour réaliser la correction on pourra utiliser au moins une valeur programmée ou mémorisée de l'angle d'azimut et au moins une valeur programmée ou mémorisée de l'angle d'assiette.

L'invention a également pour objet un dispositif permettant d'assurer la navigation et/ou le guidage et/ou le pilotage d'un projectile, dispositif comportant au moins un capteur magnétique assurant la mesure des trois composantes du champ magnétique dans un repère orthonormé lié au projectile, dispositif mettant en oeuvre le procédé selon l'invention et caractérisé en ce qu'il comprend au moins un calculateur incorporant un algorithme de calcul des angles d'Euler, calculateur associé à des moyens mémoires couplés à des moyens fournissant avant tir des données de programmation desdites mémoires, les moyens mémoires étant destinés à stocker au moins une valeur des trois composantes d'un champ magnétique de référence dans un repère terrestre fixe, ces données de programmation étant utilisées par le calculateur avec les mesures du champ magnétique sur trajectoire pour déterminer, pour au moins une partie de trajectoire ayant un angle d'azimut sensiblement constant, tout ou partie des angles d'Euler et permettre d'assurer ainsi la navigation et/ou le guidage et/ou le pilotage du projectile.

Le projectile pourra également comporter des moyens inertiels.

Le calculateur pourra incorporer des moyens permettant de corriger les mesures de champ magnétique d'une partie des perturbations apportées par l'environnement des capteurs.

L'invention sera mieux comprise à la lecture de la description qui va suivre d'un mode particulier de réalisation, description faite en référence aux dessins annexés et dans lesquels :

- la figure 1 est un schéma montrant un projectile mettant en oeuvre un dispositif de navigation et/ou guidage et/ou pilotage selon l'invention,
- la figure 2 montre un exemple de vol de projectile vers un objectif et les principales données mises en oeuvre dans les différents calculs,
- la figure 3 montre les trois rotations successives choisies et qui permettent de passer d'un repère fixe à un repère mobile,

- la figure 4 est un schéma d'architecture fonctionnelle du dispositif selon l'invention,
- les figures 5a et 5b montrent comment se situent les angles de dérapage et d'incidence,
- la figure 6 montre la linéarisation de l'angle de roulis.

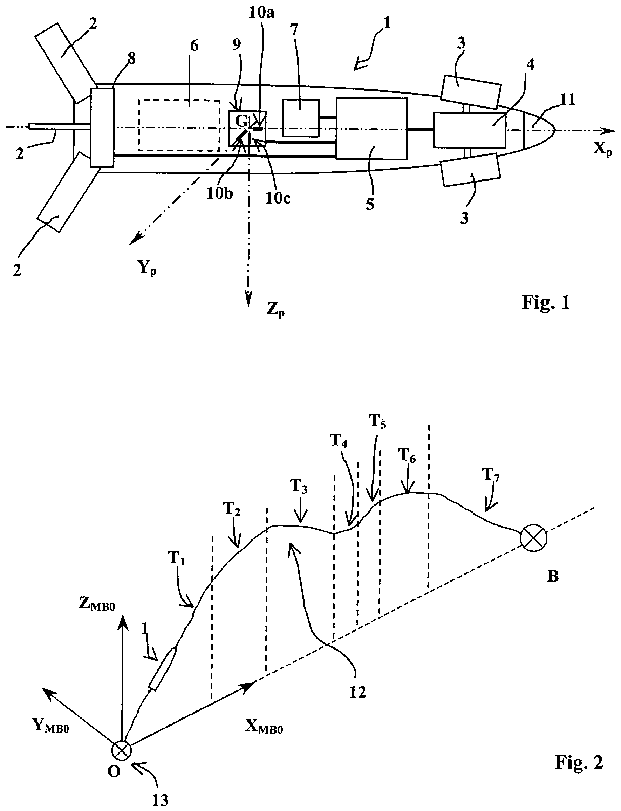

La figure 1 montre de façon schématique un mode de réalisation d'un projectile 1 mettant en oeuvre un dispositif de navigation et/ou guidage et/ou pilotage selon l'invention.

Le projectile 1 est équipé à sa partie arrière d'un empennage de stabilisation déployable 2 et à sa partie avant de quatre gouvernes canards 3, également déployables.

Un moyen de pilotage ou servomécanisme 4 assure l'entraînement en rotation des différents canards 3 pour réaliser le pilotage du projectile. Ce moyen n'est pas représenté en détails et il pourra comporter deux ou quatre motoréducteurs (un par canard ou bien un par plan de pilotage).

Ce projectile est par exemple un projectile tiré par un canon en direction d'un objectif.

Lorsque le projectile se trouve à l'intérieur du tube d'une arme (non représentée) les ailettes de l'empennage et les canards sont repliés le long du corps du projectile 1 ou bien se logent dans le corps du projectile. Ils se déploient à la sortie du tube pour assurer leurs fonctions de stabilisation ou de pilotage.

Les mécanismes de déploiement d'empennage ou de gouvernes ainsi que les moyens d'entraînement des gouvernes canards sont bien connus de l'Homme du Métier et ne font pas partie de la présente invention. On pourra se reporter aux brevets FR2846080 et FR2860577 qui décrivent de tels mécanismes.

Le pivotement des canards est commandé par un calculateur embarqué 5.

Le projectile 1 renferme également une tête militaire 6, par exemple une charge formée, une charge explosive ou bien une ou plusieurs sous munitions dispersables.

Selon une caractéristique importante de l'invention, le projectile 1 incorpore un senseur magnétique triaxial 7 (un senseur unique ou bien trois sondes magnétiques ou magnéto-résistances réparties suivant trois directions différentes d'un trièdre de mesure, par exemple trois sondes orthogonales entre elles et dirigées chacune de préférence suivant un des axes du repère lié au projectile $GX_p$, $GY_p$ ou $GZ_p$).

Ce senseur permet de mesurer les composantes du champ magnétique terrestre H dans un repère lié au projectile 1.

Le senseur magnétique 7 est relié au calculateur 5 qui assure le traitement des mesures et leur exploitation ultérieure.

Le projectile 1 comporte également une interface 8 de programmation du calculateur. Cette interface est destinée à coopérer avec un moyen de programmation (non représenté) solidaire de l'arme. Elle est reliée au calculateur 5.

On pourra par exemple prévoir un moyen de programmation inductif (tel que décrit par un des brevets FR2703412 ou DE3843476). Dans ce cas l'interface 8 sera constituée par une boucle inductive disposée au voisinage de la paroi externe du corps de projectile.

On pourrait d'une façon plus simple prévoir des zones de contacts électriques coopérant avec le programmateur de l'arme.

Le projectile 1 renferme enfin des moyens inertiels. Ces moyens inertiels 9 comprennent trois accéléromètres 10a,10b,10c orientés respectivement suivant les axes de roulis ($GX_p$), de lacet ($GY_p$) et de tangage ($GZ_p$) du projectile 1.

Les moyens inertiels 9 sont destinés d'une façon classique à permettre notamment la mise en oeuvre des lois de pilotage.

Les moyens inertiels 9 sont reliés au calculateur 5 qui assure le traitement des mesures effectuées et leur exploitation ultérieure pour la navigation, le guidage et/ou le pilotage du projectile.

Bien entendu la figure 1 n'est qu'un schéma explicatif qui ne préjuge pas des localisations et dimensions relatives des différents éléments. Concrètement une seule fusée de projectile pourra incorporer le calculateur 5, les senseurs magnétiques 7 et les accéléromètres 9.

Le projectile pourra également comprendre un détecteur de cible 11 afin de permettre une poursuite de cette dernière lorsque le projectile se trouve en phase terminale de sa trajectoire.

La figure 2 montre un exemple de trajectoire 12 que suit un projectile 1 selon l'invention entre sa plate-forme de tir 13 et une cible ou objectif B.

On a représenté sur cette figure un repère centré en O (point où est située la plate-forme ou position théorique de tir 13) et d'axes $OX_{MB0}$, $OY_{MB0}$ et $OZ_{MB0}$. Ce repère est le repère terrestre fixe de référence qui est choisi dans ce mode particulier de réalisation pour mettre en oeuvre l'invention.

C'est un repère direct et orthonormé qui a un axe horizontal $OX_{MB0}$ orienté en direction de l'objectif B et un axe vertical $OZ_{MB0}$ (l'axe $OY_{MB0}$ se déduit des deux autres pour que le repère soit orthonormé et direct).

C'est par rapport à ce repère de référence que seront évalués les angles d'Euler que forment les axes du repère lié au projectile $GX_pY_pZ_p$.

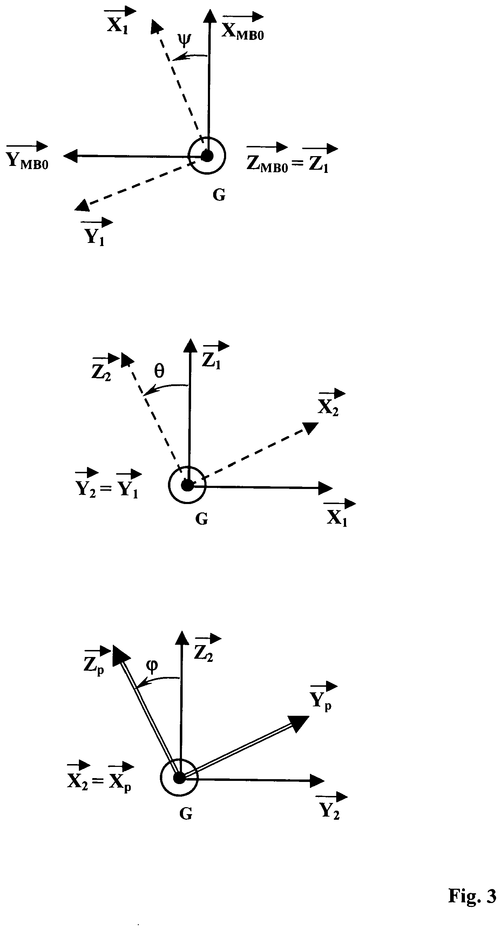

La figure 3 montre à titre de rappel les trois rotations successives qui permettent de passer d'un repère fixe $GX_{MB0}Y_{MB0}Z_{MB0}$ (repère $OX_{MB0}Y_{MB0}Z_{MB0}$ centré en G après une translation de vecteur OG) au repère mobile $GX_pY_pZ_p$

lié au projectile.

Une première rotation du repère $X_{MB0}Y_{MB0}Z_{MB0}$ est effectuée autour de l'axe $Z_{MB0}$, cette rotation définit l'angle $\psi$ (ou angle d'azimut). Le repère orthonormé direct obtenu a pour axes $X_1$, $Y_1$ (perpendiculaire à $X_1$ et $Z_1$) et $Z_1=Z_{MB0}$.

On fait ensuite pivoter le repère $X_1Y_1Z_1$ autour de l'axe $Y_1$ d'un angle $\theta$ (ou angle d'assiette). Le nouveau repère orthonormé direct obtenu a pour axes $Z_2$, $Y_2$ ($Y_2=Y_1$) et $X_2$ (perpendiculaire à $Z_2$ et $Y_2$).

On fait enfin pivoter le repère $X_2Y_2Z_2$ autour de l'axe $X_2$ d'un angle $\varphi$ (ou angle de roulis). Le nouveau repère orthonormé direct obtenu a pour axes $X_p=X_2$, Yp et $Z_p$.

La navigation du projectile (localisation de celui ci dans l'espace) ainsi que les étapes de guidage et de pilotage nécessitent de connaître à tout instant les angles d'Euler ($\psi,\theta,\varphi$) du projectile afin de pouvoir situer le projectile par rapport à son objectif et de pouvoir ainsi maîtriser les effets des commandes qui sont appliquées aux gouvernes.

Habituellement cette connaissance des angles d'Euler est fournie par une plate-forme inertielle complète comprenant trois accéléromètres et trois gyromètres.

Les gyromètres sont des organes coûteux et fragiles qui résistent mal au tir canon.

L'invention propose un procédé et un dispositif qui permettent de se passer de gyromètres.

Conformément à l'invention on va dans un premier temps introduire avant le tir dans une mémoire (ou registre) du calculateur 5 au moins une valeur des trois composantes d'un champ magnétique de référence dans le repère terrestre fixe choisi $OX_{MB0}Y_{MB0}Z_{MB0}$.

Ce champ magnétique de référence sera de préférence celui mesuré au niveau de la position de tir O. Il sera mesuré par exemple par un senseur magnétique tri axial lié à la plate-forme de tir 13 et ayant ses axes de détection orientés suivant les axes du repère fixe choisi ($OX_{MB0}Y_{MB0}Z_{MB0}$).

Par ailleurs on introduira dans une autre mémoire ou registre du calculateur 5 au moins une valeur d'angle d'azimut $\psi_n$ qui peut être considérée comme constante sur au moins une partie de la trajectoire.

En effet les projectiles tirés canon comportent au moins une partie de leur trajectoire ayant un angle d'azimut constant, c'est leur phase balistique ($T_1$ sur la figure 2).

Pour les phases non balistiques de la trajectoire du projectile (phases pilotées) il est également possible de décomposer la courbe de trajectoire théorique 12 en plusieurs tronçons dans lesquels l'angle d'azimut peut être également supposé constant. A titre d'exemple la figure 2 montre une trajectoire 12 comportant après la phase balistique $T_1$ six tronçons $T_2$, $T_3$, $T_4$, $T_5$, $T_6$ et $T_7$ sur chacun desquels l'azimut est sensiblement constant. Il est bien entendu possible de définir une courbe de trajectoire comportant un plus grand nombre de tronçons sur chacun desquels l'azimut est connu.

Le profil de trajectoire 12 est connu a priori. Il est programmable avant tir et peut être corrélé à une horloge initialisée lors du tir. Ce profil de trajectoire sera ainsi introduit sous la forme d'une table de tir dans une mémoire du calculateur du projectile. On pourra donc également et conformément à l'invention associer à un instant donné un tronçon de trajectoire particulier ayant un angle d'azimut $\psi_1$, $\psi_2$, $\psi_3$, $\psi_4$, $\psi_5$, $\psi_6$ ou $\psi_7$.

Cet angle d'azimut sera utilisé par l'algorithme proposé par l'invention pour calculer les différents angles d'Euler pour la portion de trajectoire considérée.

Conformément à l'invention on réalise enfin sur trajectoire des mesures des trois composantes du champ magnétique terrestre dans le repère orthonormé lié au projectile $GX_pY_pZ_p$.

Les différentes valeurs programmées ainsi que les valeurs mesurées sont ensuite utilisées pour calculer les angles de roulis et d'assiette du projectile.

Pour procéder à ces calculs on considèrera les matrices permettant de transformer le vecteur champ magnétique évalué dans le repère projectile en un vecteur évalué dans un repère terrestre fixe.

On notera $\overrightarrow{Hp}$ le vecteur champ magnétique mesuré à bord du projectile. Ce vecteur a pour composantes $H_{px}$, $H_{py}$ et $H_{pz}$ dans le repère lié au projectile.

On notera $\overrightarrow{H_{MB0}}$ le vecteur champ magnétique de référence. Ce vecteur a pour composantes $H_{MB0x}$, $H_{MB0y}$ et $H_{MB0z}$ dans le repère terrestre fixe.

On peut écrire : $\overrightarrow{H_p}=M_{\varphi}M_{\theta}M_{\psi}\overrightarrow{H_{MB0}}$ expression qui signifie que l'on passe d'un vecteur à l'autre par le produit de trois matrices de transformation et qui peut s'écrire sous une forme développée :

$$\begin{bmatrix} H_{px} \\ H_{py} \\ H_{pZ} \end{bmatrix} = \begin{bmatrix} 1 & 0 & 0 \\ 0 & \cos\varphi & \sin\varphi \\ 0 & -\sin\varphi & \cos\varphi \end{bmatrix} \begin{bmatrix} \cos\theta & 0 & \sin\theta \\ 0 & 1 & 0 \\ -\sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix} \begin{bmatrix} H_{MB0x} \\ H_{MB0y} \\ H_{MB0z} \end{bmatrix}$$

On voit que l'on passe d'un vecteur à l'autre par des produits matriciels successifs faisant intervenir les angles d'Euler que l'on cherche à déterminer.

On peut également noter cette transformation de la façon suivante : $\overrightarrow{H_p}=M_{\varphi}M_{\theta\psi}\overrightarrow{H_{MB0}}$ expression dans laquelle

$M_{\theta\psi}$ représente une matrice qui est le produit des deux matrices relatives aux angles $\theta$ et $\psi$. La matrice $M_{\theta\psi}$ a des coefficients que l'on notera par la suite $a_{ij}$. On pourra écrire :

$$\begin{bmatrix} H_{px} \\ H_{py} \\ H_{pZ} \end{bmatrix} = \begin{bmatrix} 1 & 0 & 0 \\ 0 & \cos\varphi & \sin\varphi \\ 0 & -\sin\varphi & \cos\varphi \end{bmatrix} \begin{bmatrix} a_{11} a_{12} a_{13} \\ a_{21} a_{22} a_{23} \\ a_{31} a_{32} a_{33} \end{bmatrix} \cdot \begin{bmatrix} H_{MB0x} \\ H_{MB0y} \\ H_{MB0z} \end{bmatrix}$$

On voit avec une telle décomposition que, si $\theta$ et $\psi$ sont connus, il est possible de déterminer l'angle de roulis $\varphi$ (les deux expressions du champ magnétique étant en effet connues par ailleurs car programmées ($H_{MB0}$) ou mesurées ($H_p$).

L'invention propose de lever l'indétermination de ces calculs en utilisant au moins une valeur connue et mémorisée ou bien programmée avant tir de l'angle d'azimut $\psi$.

On remarque en effet que la mesure de la composante $H_{px}$ du champ magnétique suivant l'axe $X_p$ ne dépend pas du roulis $\varphi$.

Elle s'écrit en effet :

$$H_{px} = a_{11}\ H_{MB0x} + a_{12}\ H_{MB0y} + a_{13}\ H_{MB0z}.$$

Ou d'une façon plus explicite :

$$H_{PX} - b\ \cos\theta - c\ \sin\theta = 0,$$

formule dans laquelle

$$b = H_{MB0X}\ \cos\psi + H_{MB0Y}\ \sin\psi\ \text{et}\ c = H_{MB0Z},$$

Lorsque l'angle d'azimut $\psi$ est connu, l'angle d'assiette $\theta$ se déduit donc immédiatement des valeurs du champ magnétique ($H_{MB0}$ préprogrammée et $H_p$ mesurée).

Les angles d'azimut et d'assiette étant connus, on calculera aisément l'angle de roulis $\varphi$.

On le calculera par la formule suivante :

$$\tan(\varphi) = \frac{H_{PY}.e - H_{PZ}.d}{H_{PY}.d + H_{PZ}.e}$$

formule dans laquelle

$$d = (a_{21}\ H_{MB0X} + a_{22}\ H_{MB0Y})$$

et

$$e = (a_{31}\ H_{MB0X} + a_{32}\ H_{MB0Y} + a_{33}\ H_{MB0Z})$$

Ces calculs de $\theta$ et de $\varphi$ pourront être réalisés sur toute portion de trajectoire $T_i$ dans laquelle un angle d'azimut $\psi_i$ peut être considéré comme sensiblement constant et se trouve donc pré déterminé.

On pourra notamment réaliser ce calcul sur la portion de trajectoire balistique du projectile ($T_1$). Dans ce cas l'angle d'azimut $\psi_n = \psi_1$, programmé avant tir, correspond à l'angle d'azimut donné au projectile lors du tir.

On pourra aussi, en phase de vol piloté, réaliser ces calculs pour les différents angles d'azimut $\psi_n$ successivement adoptés.

On pourra ainsi d'une façon simple lire la valeur de l'angle d'azimut dans une table de tir mise en mémoire dans le calculateur 5 et lue en relation avec une horloge décomptée à partir de l'instant de tir.

D'autres façons de choisir la valeur de l'angle d'azimut sont possibles et seront décrites dans la suite de la présente description.

On notera que si $H_{PY}$ et $H_{PZ}$ sont nuls, il n'est a priori plus possible de connaître la position en roulis du projectile avec le calcul précédent. Une telle configuration apparaît lorsque le projectile vole avec son axe $X_P$ colinéaire au champ magnétique terrestre. Il suffit pour éviter un tel problème de tirer le projectile en évitant une telle configuration. On choisira une position de tir O appropriée et on évitera une forme de trajectoire 12 conduisant à une telle colinéarité.

Une fois les angles d'Euler $\psi$, $\theta$ et $\varphi$ calculés, on pourra facilement évaluer les composantes du vecteur instantané de rotation $\Omega$ du projectile dans un repère mobile lié au projectile.

La connaissance de ce vecteur est indispensable pour conduire les étapes habituelles de navigation, guidage et pilotage d'un projectile.

$$\vec{\Omega}=\begin{pmatrix} q \\ r \\ p \end{pmatrix}=\begin{bmatrix} \dot{\psi}\cos\theta\sin\varphi-\dot{\theta}\cos\varphi \\ \dot{\psi}\cos\theta.\cos\varphi+\dot{\theta}\sin\varphi \\ \dot{\varphi}-\dot{\psi}\sin\theta \end{bmatrix}$$

Les composantes de ce vecteur sont :

Avec $\dot{\psi}=\dfrac{d\psi}{dt}$ ; $\dot{\theta}=\dfrac{d\theta}{dt}$ et $\dot{\varphi}=\dfrac{d\varphi}{dt}$ , les dérivées des angles calculés par rapport au temps.

On voit ainsi qu'il est possible d'obtenir les trois composantes du vecteur rotation sans avoir recours à un gyromètre.

On remarquera qu'au cours des différentes phases d'évaluation dans lesquelles l'angle d'azimut est considéré comme constant, notamment au cours de la phase balistique du projectile, la vitesse de rotation en roulis p pourra être tout simplement approximée à $\dot{\varphi}=\dfrac{d\varphi}{dt}$ , en effet la dérivée de l'angle d'azimut est toujours nulle au cours de ces phases.

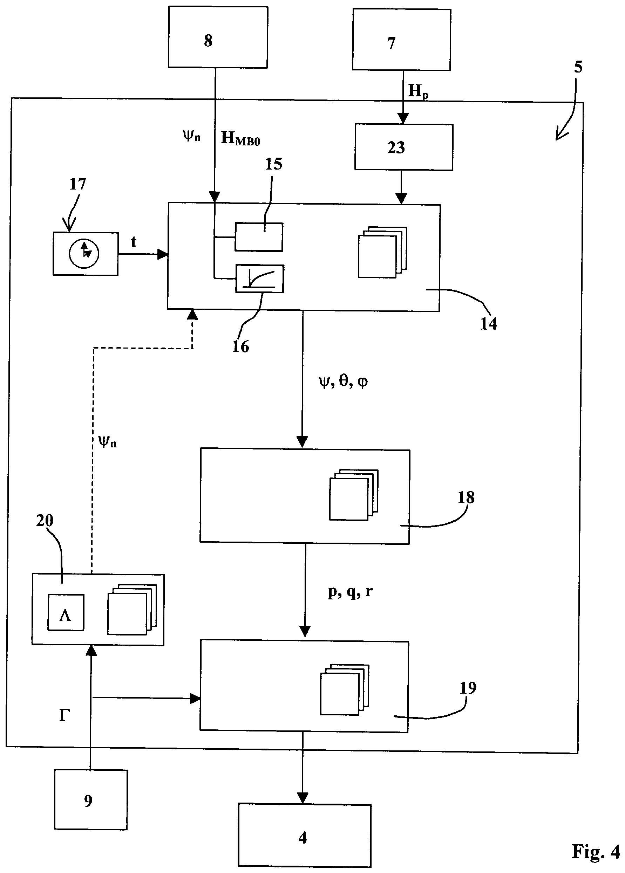

La figure 4 montre un exemple d'organisation structurelle et fonctionnelle d'un dispositif selon l'invention.

Le calculateur 5 incorpore différents modules de calcul réalisés sous la forme d'algorithmes mis en mémoires ou registres.

Un premier module 14 effectue le calcul des angles $\psi$, $\theta$ et $\varphi$ à partir des données de programmations fournies avant le tir par les moyens de programmation 8 ou pré programmées dans le calculateur 5 et à partir des mesures des composantes du champ magnétique effectuées pendant le vol du projectile par le senseur magnétique triaxial 7.

Les données de programmation incorporent une mesure des trois composantes du champ magnétique $H_{MB0}$ de référence dans le repère terrestre fixe centré sur la position de tir, mesure qui est stockée dans la mémoire 15.

Elles incorporent également une ou plusieurs valeurs d'angle d'azimut $\psi_n$ considérées comme connues a priori sur une partie différente de la trajectoire.

Ces valeurs sont associées par exemple à une table de tir mise dans une mémoire 16 et dont l'exploitation est faite par l'algorithme en liaison avec l'information de temps donnée par une horloge 17 qui est initialisée après détection du tir du projectile (par des moyens classiques non représentés, par exemple un capteur de l'accélération initiale).

Un deuxième module de calcul 18 réalise la dérivation des angles calculés et évalue les composantes p, q et r du vecteur instantané de rotation du projectile.

Ces éléments sont exploités dans un troisième module 19 de guidage et/ou de pilotage qui met en oeuvre des lois de guidage ou pilotage connues et qu'il n'est pas nécessaire de décrire ici en détails.

Le module de guidage / pilotage 19 utilise par ailleurs les données d'accélération du projectile fournies par les moyens inertiels 9.

Ce module assure la commande du servomécanisme 4 entraînant les gouvernes 3.

La description précédente a été faite avec un repère de référence centré sur la position de tir et ayant un axe horizontal $OX_{MB0}$ orienté en direction de l'objectif.

Il serait bien entendu possible de choisir un repère de référence orienté différemment. Pour mettre en oeuvre l'invention, il sera cependant nécessaire alors de définir l'orientation des axes du repère de référence par rapport à la direction OB (droite joignant la plate forme de tir à l'objectif). Les calculs ultérieurs utiliseront alors des matrices de transfert assurant le passage du repère de référence au repère dont l'axe $OX_{MB0}$ est orienté vers l'objectif pour définir les différents angles. Ces éléments d'orientation du repère de référence seront par exemple programmés avant tir en même temps que les composantes du champ magnétique dans le repère de référence ainsi que la ou les valeurs de l'angle d'azimut $\psi$.

A titre de variante il serait possible de définir un système d'arme (associant plate-forme de tir et projectile) conçu de telle sorte que l'azimut initial $\psi_0$ soit toujours nul. Une telle variante permet d'éviter d'avoir à programmer la valeur initiale de l'azimut, cette valeur $\psi=0$ qui est fixée sera alors incorporée dans le calculateur 5 du projectile comme une donnée de calcul initiale. Il est cependant nécessaire alors de programmer les éléments d'orientation du repère de référence si ce dernier n'est pas choisi avec son axe OX orienté en direction de l'objectif.

Concrètement adopter $\psi=0$ revient à choisir de tirer toujours dans le plan vertical OXZ du repère de référence choisi.

A titre de variante il est possible de remplacer la mise en mémoire d'une table de tir donnant les différents angles d'azimut par une valeur $\psi_n$ qui est calculée d'une façon continue sur trajectoire à partir des coefficients aérodynamique du projectile et d'une mesure de l'accélération.

Ce calcul est réalisé dans un module d'évaluation d'azimut 20 spécifique qui utilise les mesures d'accélération fournies par les moyens inertiels 9 ainsi qu'une évaluation du coefficient aérodynamique A du projectile qui est mise en mémoire (A est appelée généralement la constante de temps d'incidence du projectile).

Ce calcul d'azimut est réalisé à partir d'un calcul des angles que fait la projection du vecteur vitesse V de l'obus dans les plans $GX_{MB0}Y_{MBO}$ et $GX_{MB0}Z_{MB0}$ du repère fixe par rapport aux axes de ce repère.

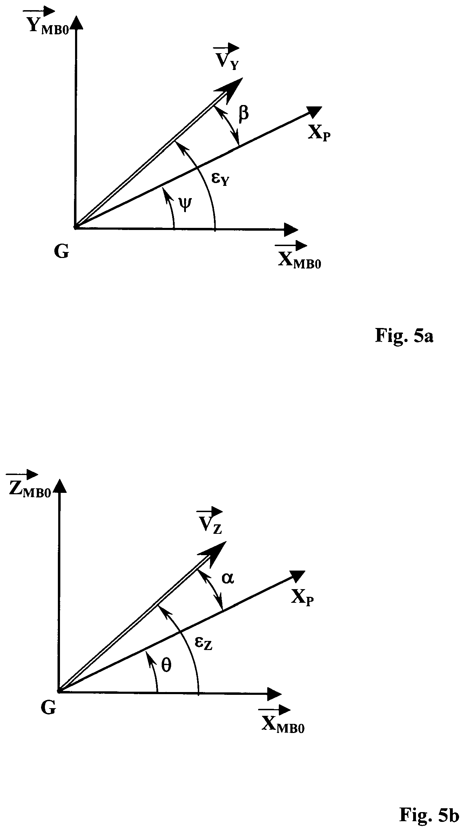

La figure 5a montre ainsi le plan de dérapage $GX_{MB0}Y_{MBO}$ dans lequel la projection $V_Y$ du vecteur vitesse de l'obus fait un angle P (angle de dérapage) avec l'axe $GX_P$ de l'obus et un angle $\varepsilon_Y$ (azimut aérodynamique) avec l'axe $GX_{MB0}$. L'angle d'azimut $\psi$ est également représenté sur cette figure.

La figure 5b montre le plan d'incidence $GX_{MB0}Z_{MBO}$ dans lequel la projection $V_Z$ du vecteur vitesse de l'obus fait un angle $\alpha$ (angle d'incidence) avec l'axe $GX_P$ de l'obus et un angle $\varepsilon_Z$ (pente aérodynamique) avec l'axe $GX_{MB0}$. L'angle d'assiette $\theta$ est également représenté sur cette figure.

Les moyens inertiels 9 permettent de déterminer à un instant t la valeur des composantes du vecteur accélération suivant les axes $GX_P$, $GY_P$ et $GZ_P$ du projectile.

On met en oeuvre la formule classique liant la valeur de l'angle d'azimut $\psi$ au coefficient aérodynamique A et à l'angle $\varepsilon_Y$ pour un projectile piloté par gouvernes canards.

$$\frac{\varepsilon_Y}{\psi} = \frac{1}{1 + \Lambda s}$$

Expression dans laquelle s est l'opérateur de Laplace (dérivée par rapport au temps) et qui peut aussi s'écrire : $\psi = \varepsilon_Y + A\, d\varepsilon_Y/dt$. La connaissance à un instant donné de l'angle $\varepsilon_Y$ permet donc de déduire l'angle d'azimut $\psi$.

Une intégration des composantes du vecteur accélération mesuré permet de déterminer les composantes du vecteur vitesse. Ce dernier est projeté sur le plan $GX_{MB0}Y_{MBO}$ en utilisant une matrice de transfert $M(\psi,\theta,\varphi)$ faisant intervenir les angles d'Euler.

On voit que ce type de calcul de l'angle d'azimut impose de connaître cette matrice, donc également l'angle d'azimut. En fait, conformément à l'invention, on s'appuiera sur une valeur initiale connue de l'angle d'azimut $\psi_n$ (par exemple celle préprogrammée, ou bien fixée par construction dans le calculateur (telle que $\psi=0$) et correspondant à la phase balistique).

Puis on déterminera de proche en proche les valeurs de l'angle d'azimut à partir des valeurs calculées précédemment.

On met pour cela en oeuvre les étapes décrites précédemment pour déterminer les angles $\theta$ et $\varphi$ à l'aide des mesures du champ magnétique ainsi que des valeurs de champ de référence préprogrammées.

Puis on procédera par itérations successives suivant une période d'échantillonnage T donnée.

On déterminera ainsi à l'instant t=n la valeur de l'angle d'azimut $\psi_n$ à partir des valeurs de l'accélération mesurée à l'instant t=n et avec les coefficients de la matrice $M(\psi,\theta,\varphi)$ calculés à l'instant t = n-T.

A un instant t = n donné on a donc :

$\psi_n = f\,(\gamma_n, H_n, H_{MB0}, \psi_{n-T}, \theta_{n-T}, \varphi_{n-T})$ dont on déduit: $\theta_n$ et $\varphi_n$ ainsi que les angles $p_n$, $q_n$ et $r_n$.

Il suffit de réitérer cette évaluation le long de la trajectoire du projectile pour avoir, sans gyromètres, les paramètres nécessaires à la navigation, au guidage et au pilotage.

Ce mode de réalisation permet d'améliorer (pour un projectile à gouvernes canards) les performances du procédé de navigation selon l'invention en permettant de pallier la majeure partie des erreurs liées aux perturbations magnétiques et aérodynamiques sur la localisation théorique des zones d'azimut constant.

Pour un projectile piloté par des ailes ou gouvernes autres que des canards, il existe d'autres formules de définition des coefficients aérodynamiques du projectile. L'Homme du Métier pourra aisément mettre en oeuvre ces formules pour calculer, pour ces types de projectiles, les différentes valeurs de l'angle d'azimut $\psi_n$.

Des simulations des algorithmes ont été réalisées pour différentes configurations de champ magnétique terrestre et elles ont été comparées avec les données théoriques attendues.

On a pu observer une excellente restitution des différents angles $(\psi,\theta,\varphi)$ ainsi que des différentes vitesses de rotation (p,q,r) et cela aussi bien pour des vitesses de rotation de projectile faibles (de l'ordre de 1 tour / seconde) que pour des vitesses plus importantes (de l'ordre de 15 tours / seconde).

En effet les écarts observés lors de trajectoires perturbées sont dans tous les cas inférieurs à 2° à 3° pour chaque angle, ce qui est suffisant pour un projectile ayant une trajectoire de courte portée (inférieur à 10 km).

Ces écarts peuvent être inférieurs au degré si on corrige les perturbations magnétiques et que l'on tient compte des perturbations balistiques (en introduisant par exemple un biais lors du tir).

On observe un bruitage de l'évaluation de l'angle de roulis φ ainsi que de la vitesse de rotation en roulis p.

Ce bruitage est lié au fait que l'angle est estimé à partir d'une fonction arc tangente dont le résultat est compris entre -π et +π (ou entre 0 et 2π avec un choix de fonction arc tangente différent) et présente une discontinuité au passage à la valeur π. Cette discontinuité perturbe le calcul de la dérivée.

Afin de corriger cette perturbation on prévoira, au niveau du module 14 assurant le calcul des angles, un algorithme de linéarisation de la valeur de l'angle de roulis φ calculé.

Cette linéarisation est basée sur la connaissance a priori de l'amplitude du saut de l'angle de roulis qui est de 2π à chaque fois.

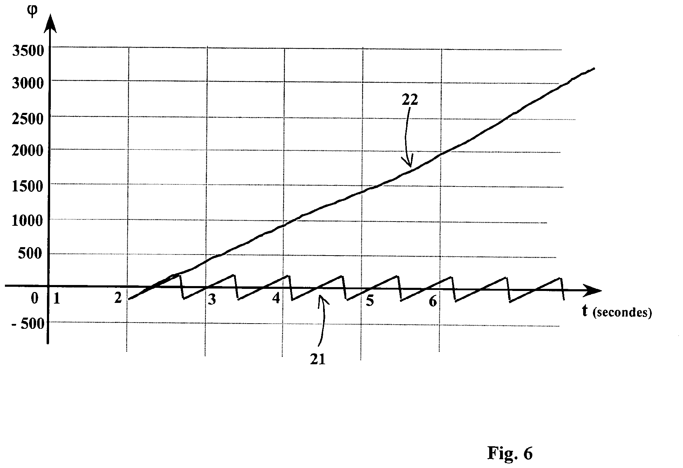

La figure 6 montre ainsi la valeur de l'angle de roulis φ calculé (courbe en "dents de scie" 21) et la valeur linéarisée (courbe 22).

Cette linéarisation sera réalisée de la façon suivante :

On détectera les sauts brusques de la courbe 21, par exemple en calculant périodiquement les écarts entre deux angles $(\varphi_2,\varphi_1)$ successivement calculés, la détection d'un saut correspond alors à l'apparition d'un écart $|\varphi_2-\varphi_1|$ supérieur à un seuil préprogrammé. On estimera dans quel sens le saut a lieu (par la détermination du signe de $(\varphi_2-\varphi_1)$.

On incrémentera un compteur avec la valeur de φ à laquelle, à chaque saut, on ajoutera un écart permettant de faire disparaître les sauts. Cet écart sera par exemple calculé en ajoutant (après un saut ainsi détecté) à la valeur de l'angle calculée et précédant ledit saut, un écart correspondant à la valeur du saut corrigée de 2π.

L'Homme du Métier déterminera aisément le type de calcul à accomplir pour obtenir la courbe 21 souhaitée et il n'est pas nécessaire de décrire ici en détail l'algorithme adopté.

D'une façon préférée la fonction arc tangente utilisée sera préalablement corrigée de façon à donner à la valeur de l'arc calculée une valeur comprise entre 0 et 2π.

C'est la valeur linéarisée de φ qui sera utilisée dans les différents calculs, notamment ceux faisant intervenir

$$\dot{\varphi}=\frac{d\varphi}{dt} \ .$$

Par ailleurs le champ magnétique mesuré par le senseur magnétique triaxial 7 est susceptible d'être perturbé par l'environnement électromagnétique du projectile 1.

Les éléments les plus perturbateurs sont les moteurs du servomécanisme 4 car ils mettent en oeuvre des aimants permanents.

Le corps du projectile lui-même est également source de perturbation des mesures. En effet sa masse métallique induit une déformation locale des lignes du champ magnétique terrestre.

Afin de corriger les perturbations engendrées, on prévoira au niveau du calculateur 5 un moyen permettant d'apporter au moins une correction aux mesures effectuées. Ce moyen a été schématisé sur la figure 4 par le bloc 23.

Afin d'assurer une telle correction on pourra par exemple utiliser une phase de vol dans laquelle l'angle d'azimut ψ est stable (par exemple la phase balistique $T_1$ du projectile). On mesurera pendant cette phase le champ magnétique et on le comparera à la valeur de référence $H_{MB0}$ qui a été mise en mémoire avant le tir.

Lorsque l'azimut est constant, les valeurs théoriques des composantes $(H_{PX},H_{PY},H_{PZ})$ du vecteur champ magnétique dans le repère lié au projectile sont facilement déterminables. En effet, ces valeurs sont données par la résolution de l'égalité vectorielle vue précédemment : $\overrightarrow{H_p}=M_{\psi\theta\varphi}\cdot\overrightarrow{H_{MB0}}$ dans laquelle $M_{\psi\theta\varphi}$ est la matrice de transfert de repère faisant intervenir les angles d'Euler. Il est facile de déterminer à partir de cette équation la valeur théorique $(H_{PXTH})$ attendue pour $H_{PX}$. En effet, comme il a été exposé précédemment, l'angle φ n'intervient pas pour le calcul de $H_{PX}$ alors que ψ est connu car il s'agit de l'azimut théorique de tir qui a été préprogrammé et que θ (angle d'assiette) initial est lui aussi connu.

On programmera donc dans le calculateur 5 du projectile une valeur théorique du champ $H_{PXTH}$, puis on comparera pendant les premiers instants de la trajectoire balistique cette valeur théorique avec la valeur effectivement mesurée $H_{PXmes}$ conformément au procédé selon l'invention. On en déduira un écart : $Cor = H_{PXTH} - H_{PXmes}$. Cet écart sera par la suite appliqué à toutes les mesures de $H_{PX}$ et il permettra de corriger les perturbations de mesures suivant l'axe longitudinal $GX_P$ du projectile.

On pourra appliquer une méthode analogue pour corriger les mesures suivant les axes transversaux $GY_P$ et $GZ_P$.

Ces corrections feront intervenir l'angle de roulis φ. Le facteur de correction ne pourra être calculé que lorsque le projectile tournera quelque peu sur lui-même (vitesse d'au moins 0,25 tours / seconde), ce qui interviendra quelques secondes après le tir mais toujours pendant la phase balistique.

La correction suivant les axes transversaux est basée sur le fait que les mesures $H_{PY}$ et $H_{PZ}$ doivent être en théorie sinusoïdales et en quadrature de phase. Ce qui veut dire qu'en théorie, si une mesure suivant la direction $G_{YP}$ est maximale elle doit être nulle sur la voie $GZ_P$. Par ailleurs le module du champ reste constant pendant le vol (et normé à 1 dans les calculs).

On peut donc écrire : $|H_P|^2 = 1 = (H_{PX}^2 + H_{PY}^2 + H_{PZ}^2)$ et en déduire : $H_{Pymax}^2 = H_{Pzmax}^2 = 1 - (H_{PX}^2)$.

Il suffit alors de comparer au cours de la phase de test les valeurs effectivement calculées pour les maximums de $H_{PY}$ et $H_{PZ}$ avec les valeurs théoriques déduites du calcul de la valeur de $(1 - (H_{PX}^2))$, calcul fait à partir bien entendu de $H_{PX}$ corrigé suivant la méthode précédemment décrite.

On corrige alors dans la suite du vol toutes les valeurs mesurées en $H_{PY}$ et $H_{PZ}$ à l'aide d'un biais qui sera égal à l'écart entre les valeurs théoriques et réelles ainsi mesurées pendant la phase d'évaluation. Pour être complète la correction prendra également en compte un facteur d'échelle qui sera déterminé en effectuant au moins une deuxième mesure comparative entre les valeurs théoriques et le réelles de $H_{PY}$ et $H_{PZ}$.

Différentes variantes sont possibles sans sortir du cadre de l'invention.

Il est ainsi possible de mettre en oeuvre l'invention dans un projectile n'ayant pas de trajectoire balistique par exemple un missile. Il suffit pour cela que l'on puisse déterminer sur trajectoire (ou bien programmer avant tir) au moins une valeur d'angle d'azimut qui sera considérée comme connue sur au moins une partie de la trajectoire.

Dans tous les exemples décrits précédemment on a considéré comme valeur de référence le champ magnétique $H_{MB0}$ mesuré au niveau de la plate-forme de tir 13. Ce champ est considéré comme constant sur toute la trajectoire prévue pour le projectile.

Cela est vrai dans la plupart des cas où la portée du projectile est modérée (inférieure à 100 km). Pour les projectiles ayant une portée supérieure, il sera nécessaire de remplacer la programmation initiale d'un champ de référence par la mise en place dans le projectile de plusieurs valeurs de champs magnétiques de référence qui devront être adoptées successivement sur trajectoire dans les différents calculs. Ces valeurs pourront être adoptées en liaison avec une information de localisation donnée par un système de positionnement par satellite (GPS) embarqué.

L'invention permettra alors de simplifier le guidage/pilotage d'un missile ou d'une roquette en permettant de supprimer les gyromètres.

## Revendications

1. Procédé permettant d'assurer la navigation et/ou le guidage et/ou le pilotage d'un projectile (1) vers un objectif (B), procédé dans lequel on utilise un calcul de tout ou partie des angles d'Euler $(\psi, \theta, \varphi)$ du projectile pour permettre la détermination de l'attitude et/ou la localisation du projectile (1) dans un repère terrestre, procédé *caractérisé en ce que* :

   on introduit avant tir dans une mémoire ou registre d'un calculateur (5) du projectile (1) au moins une valeur des trois composantes $(H_{MB0x}, H_{MB0y}, H_{MB0z})$ d'un champ magnétique de référence dans un repère terrestre fixe, direct et orthonormé, repère centré sur la position de tir O et ayant un axe horizontal et un axe vertical, l'orientation du repère par rapport à la direction de l'objectif (B) étant connue et fixée ou programmée,
   on fixe par construction ou on programme avant tir dans une autre mémoire ou registre du calculateur (5), au moins une valeur d'angle d'azimut $(\psi)$,
   on réalise sur trajectoire au moins une mesure des trois composantes $(H_{px}, H_{py}, H_{pz})$ du champ magnétique dans un repère orthonormé lié au projectile (1),
   on calcule sur trajectoire l'angle de roulis $\varphi$ et/ou l'angle d'assiette $\theta$ à partir des valeurs de champ magnétique mesurées, du ou des valeurs du champ de référence et de la valeur d'angle d'azimut mémorisée pour la partie de trajectoire considérée.

2. Procédé de navigation et/ou guidage et/ou pilotage selon la revendication 1, **caractérisé en ce que** le repère terrestre fixe est choisi centré sur la position de tir O et ayant un axe horizontal $OX_{MB0}$ orienté en direction de l'objectif (B).

3. Procédé de navigation et/ou guidage et/ou pilotage selon une des revendications 1 ou 2, **caractérisé en ce que** la valeur du champ magnétique de référence $(H_{MB0x}, H_{MB0y}, H_{MB0z})$ est mesurée avant tir au niveau de la position de tir O et introduite en mémoire, le calcul du ou des angles étant réalisé à partir de cette mesure.

4. Procédé de navigation et/ou guidage et/ou pilotage selon la revendication 3, **caractérisé en ce qu'**on calcule l'angle d'assiette $\theta$ à partir d'au moins une mesure de la composante $H_{PX}$ du champ magnétique suivant l'axe $X_P$ du projectile par la formule suivante :

$$H_{PX} - b \cos\theta - c \sin\theta = 0,$$

formule dans laquelle

b et c sont des coefficients fonction des composantes $H_{MB0X}$, $H_{MB0Y}$ et $H_{MB0Z}$ du champ magnétique de référence dans le repère terrestre fixe telles que programmées avant tir et $\psi_n$ étant une valeur de l'angle d'azimut connue sur la partie (Tn) de trajectoire (12) considérée.

5. Procédé de navigation et/ou guidage et/ou pilotage selon la revendication 4, **caractérisé en ce qu'**on calcule l'angle de roulis $\varphi$ à partir du calcul de l'angle d'assiette et en utilisant au moins une mesure des composantes $H_{PY}$ et $H_{PZ}$ du champ magnétique suivant les axe $Y_P$ et $Z_P$ du projectile par la formule suivante :

$$\tan(\varphi) \;=\; \frac{H_{PY}.e - H_{PZ}.d}{H_{PY}.d + H_{PZ}.e}$$

formule dans laquelle

d et e étant des coefficients fonction des composantes $H_{MB0X}$, $H_{MB0Y}$ et $H_{MB0Z}$ du champ magnétique de référence dans le repère terrestre fixe telles que programmées avant tir et des coefficients d'une matrice $M(\theta,\psi)$ de passage partiel du repère terrestre fixe au repère lié au projectile (1) et ne faisant intervenir que les angles d'azimut $\psi$ et d'assiette $\theta$.

6. Procédé de navigation et/ou guidage et/ou pilotage selon la revendication 5, **caractérisé en ce que** après calcul de l'angle de roulis $\varphi$ on procède à une linéarisation de sa valeur.

7. Procédé de navigation et/ou guidage et/ou pilotage selon une des revendications 4 à 6, **caractérisé en ce que**, pour une phase de vol balistique, l'angle d'azimut $\psi_n - \psi_1$ est fixé en mémoire ou programmé avant tir et correspond à l'angle d'azimut donné au projectile (1) lors du tir.

8. Procédé de navigation et/ou guidage et/ou pilotage selon une des revendications 4 à 6, **caractérisé en ce que**, pour une phase de vol piloté, l'angle d'azimut $\psi_n$ adopté pour la partie (Tn) de trajectoire (12) considérée est une valeur qui est mémorisée avant tir et incorporée dans une table de tir (16) qui est lue en relation avec une horloge (17) décomptée à partir de l'instant de tir.

9. Procédé de navigation et/ou guidage et/ou pilotage selon une des revendications 4 à 6, **caractérisé en ce que**, pour une phase de vol piloté, l'angle d'azimut $\psi_n$ adopté pour la partie de trajectoire considérée est une valeur qui est calculée sur trajectoire à partir des coefficients aérodynamiques du projectile, d'au moins une mesure de l'accélération et d'au moins une valeur fixée en mémoire ou programmée d'un angle d'azimut.

10. Procédé de navigation et/ou guidage et/ou pilotage selon une des revendications 1 à 9, **caractérisé en ce qu'**on évalue les composantes du vecteur instantané de rotation $\vec{\Omega}$ du projectile (1) dans un repère lié au projectile à partir des valeurs des angles d'Euler calculées ainsi que de leurs dérivées en fonction du temps.

11. Procédé de navigation et/ou guidage et/ou pilotage selon une des revendications 1 à 10, **caractérisé en ce que**, afin de corriger les mesures de champ magnétique d'une partie des perturbations apportées par l'environnement des capteurs (7) on procède à au moins une correction pendant une phase ayant un angle d'azimut $\psi$ stable, correction comprenant une mesure d'un écart entre le champ magnétique théorique et le champ magnétique mesurée.

12. Procédé de navigation et/ou guidage et/ou pilotage selon la revendication 11, **caractérisé en ce que**, pour réaliser la correction, on utilise au moins une valeur programmée ou mémorisée de l'angle d'azimut $\psi$ et au moins une valeur programmée ou mémorisée de l'angle d'assiette $\theta$.

13. Dispositif permettant d'assurer la navigation et/ou le guidage et/ou le pilotage d'un projectile (1), dispositif comportant au moins un capteur magnétique (7) assurant la mesure des trois composantes $(H_{px}, H_{py}, H_{pz})$ du champ magnétique dans un repère orthonormé lié au projectile (1), dispositif mettant en oeuvre le procédé selon une des revendications précédentes et **caractérisé en ce qu'**il comprend au moins un calculateur (5) incorporant un algorithme (14) de calcul des angles d'Euler, calculateur associé à des moyens mémoires (15) couplés à des moyens (8) fournissant avant tir des données de programmation desdites mémoires, les moyens mémoires étant destinés à stocker au moins une valeur des trois composantes d'un champ magnétique de référence $(H_{MB0x}, H_{MB0y}, H_{MB0z})$ dans un repère terrestre fixe, ces données de programmation étant utilisées par le calculateur (5) avec les mesures du champ magnétique sur trajectoire pour déterminer, pour au moins une partie (Tn) de trajectoire (12) ayant un angle d'azimut (ψn) sensiblement constant, tout ou partie des angles d'Euler et permettre d'assurer ainsi la navigation et/ou le guidage et/ou le pilotage du projectile (1).

**14.** Dispositif selon la revendication 13, **caractérisé en ce que** le projectile comporte des moyens inertiels (9).

**15.** Dispositif selon une des revendications 13 ou 14, **caractérisé en ce que** le calculateur (5) incorpore des moyens (23) permettant de corriger les mesures de champ magnétique d'une partie des perturbations apportées par l'environnement des capteurs.

**Patentansprüche**

**1.** Verfahren, welches es ermöglicht, die Navigation und/oder die Führung und/oder die Steuerung eines Projektils (1) auf ein Ziel (B) zu gewährleisten, wobei bei dem Verfahren eine Berechnung sämtlicher oder eines Teils der Eulerschen Winkel ($\psi,\theta,\varphi$) des Projektils verwendet wird, um die Bestimmung der Fluglage und/oder der Lokalisierung des Projektils (1) in einem terrestrischen Koordinatensystem zu ermöglichen, wobei das Verfahren *dadurch gekennzeichnet ist, dass:*

vor dem Abschuss in einen Speicher oder ein Register eines Rechners (5) des Projektils (1) mindestens eine Wert der drei Komponenten ($H_{MB0x}$,$H_{MB0y}$,$H_{MB0z}$) eines Bezugsmagnetfeldes in einem festen, direkten und orthonormierten terrestrischen Koordinatensystem eingetragen wird, wobei das Koordinatensystem auf die Schußposition O zentriert ist und eine horizontale Achse und eine vertikale Achse aufweist, wobei die Orientierung des Koordinatensystems in Bezug auf die Richtung des Ziels (B) bekannt und festgelegt oder programmiert ist,
mindestens ein Azimut-Winkelwert ($\psi$) durch Konstruktion festgelegt oder vor dem Abschuss in einem anderen Speicher oder Register des Rechners (5) programmiert wird,
auf der Flugbahn mindestens eine Messung der drei Komponenten ($H_{px}$,$H_{py}$,$H_{pz}$) des Magnetfeldes in einem orthonormierten, an das Projektil (1) gebundenen Koordinatensystem durchgeführt wird,
auf der Flugbahn der Rollwinkel $\varphi$ und/oder der Neigungswinkel $\theta$ ausgehend von den gemessenen Magnetfeld-Werten des oder der Werte des Referenzfeldes und des gespeicherten Azimut-Winkelwerts für den betreffenden Teil der Flugbahn berechnet wird.

**2.** Verfahren zur Navigation und/oder Führung und/oder Steuerung nach Anspruch 1, **dadurch gekennzeichnet, dass** das feste terrestrische Koordinatensystem so ausgewählt wird, dass es auf die Schußposition 0 zentriert ist und eine horizontale Achse $OX_{MB0}$ aufweist, welche in Richtung des Ziels (B) orientiert ist.

**3.** Verfahren zur Navigation und/oder Führung und/oder Steuerung nach einem der Ansprüche 1 oder 2, **dadurch gekennzeichnet, dass** der Wert des Bezugsmagnetfeldes ($H_{MB0x}$,$H_{MB0y}$,$H_{MB0z}$) vor dem Abschuss im Bereich der Schußposition O gemessen und im Speicher eingetragen wird, wobei die Berechnung des oder der Winkel ausgehend von dieser Messung durchgeführt wird.

**4.** Verfahren zur Navigation und/oder Führung und/oder Steuerung nach Anspruch 3, **dadurch gekennzeichnet, dass** der Neigungswinkel $\theta$ ausgehend von mindestens einer Messung der Komponente $H_{PX}$ des Magnetfeldes gemäß der Achse $X_P$ des Projektils durch die folgende Formel berechnet wird:

$$H_{PX} - b\,\cos\theta - c\,\sin\theta = 0,$$

wobei in der Formel
b und c Funktionskoeffizienten der Komponenten $H_{MB0X}$, $H_{MB0Y}$ und $H_{MB0Z}$ des Bezugsmagnetfeldes in dem festen, terrestrischen Koordinatensystem sind, die beispielsweise vor dem Abschuss programmiert werden, und $\psi_n$ ein Azimutwinkelwert ist, welcher über den betreffenden Teil (Tn) der Flugbahn (12) bekannt ist.

**5.** Verfahren zur Navigation und/oder Führung und/oder Steuerung nach Anspruch 4, **dadurch gekennzeichnet, dass** der Rollwinkel $\varphi$ ausgehend von der Berechnung des Neigungswinkels unter Verwendung von mindestens einer Messung der Komponenten $H_{PY}$ und $H_{PZ}$ des Magnetfeldes gemäß den Achsen $Y_P$ und $Z_P$ des Projektils durch die folgende Formel berechnet wird:

$$\tan(\varphi) = \frac{H_{PY}.e - H_{PZ}.d}{H_{PY}.d + H_{PZ}.e},$$

wobei in der Formel
d und e Funktionskoeffizienten der Komponenten $H_{MB0X}$, $H_{MB0Y}$ und $H_{MB0Z}$ des Bezugsmagnetfeldes in dem festen, terrestrischen Koordinatensystem, die beispielsweise vor dem Abschuss programmiert werden, und Koeffizienten einer teilweisen Übergangsmatrix $M(\theta,\psi)$ von dem festen, terrestrischen Koordinatensystem zu dem an das Projektil (1) gebundenen Koordinatensystem sind, und wobei nur die Azimutwinkel $\psi$ und Neigungswinkel $\theta$ berücksichtigt werden.

6. Verfahren zur Navigation und/oder Führung und/oder Steuerung nach Anspruch 5, **dadurch gekennzeichnet, dass** nach Berechnung des Rollwinkels $\varphi$ mit einer Linearisierung dessen Wertes fortgefahren wird.

7. Verfahren zur Navigation und/oder Führung und/oder Steuerung nach einem der Ansprüche 4 bis 6, **dadurch gekennzeichnet, dass** während einer ballistischen Flugphase der Azimutwinkel $\psi_n = \psi_1$ im Speicher festgelegt oder vor dem Abschuss programmiert wird und dem Azimutwinkel entspricht, welcher dem Projektil (1) beim Abschuss verliehen wird.

8. Verfahren zur Navigation und/oder Führung und/oder Steuerung nach einem der Ansprüche 4 bis 6, **dadurch gekennzeichnet, dass** während einer gesteuerten Flugphase der für den betreffenden Teil (Tn) der Flugbahn (12) angenommene Azimutwinkel $\psi_n$ ein Wert ist, welcher vor dem Abschuss gespeichert wurde und in eine Schusstabelle (16) eingefügt wird, welche in Zusammenhang mit einer ab dem Zeitpunkt des Abschusses laufenden Uhr (17) ausgelesen wird.

9. Verfahren zur Navigation und/oder Führung und/oder Steuerung nach einem der Ansprüche 4 bis 6, **dadurch gekennzeichnet, dass** während einer gesteuerten Flugphase der für den betreffenden Teil der Flugbahn angenommene Azimutwinkel $\psi_n$ ein Wert ist, welcher auf der Flugbahn ausgehend von aerodynamischen Koeffizienten des Projektils, mindestens einer Messung der Beschleunigung und mindestens einem im Speicher festgelegten oder programmierten Wert eines Azimutwinkels berechnet wird.

10. Verfahren zur Navigation und/oder Führung und/oder Steuerung nach einem der Ansprüche 1 bis 9, **dadurch gekennzeichnet, dass** die Komponenten des augenblicklichen Drehvektors $\vec{\Omega}$ des Projektils (1) in einem an das Projektil gebundenen Koordinatensystem ausgehend von den Werten der berechneten Eulerschen Winkel sowie ihrer zeitlichen Ableitungen ausgewertet werden.

11. Verfahren zur Navigation und/oder Führung und/öder Steuerung nach einem der Ansprüche 1 bis 10, **dadurch gekennzeichnet, dass**, um die Magnetfeldmessungen von einem Teil der durch die Umgebung der Sensoren (7) beigetragenen Störungen zu bereinigen, wird mindestens eine Korrektur während einer Phase durchgeführt, welche einen stabilen Azimutwinkel $\psi$ aufweist, wobei die Korrektur eine Messung eines Unterschieds zwischen dem theoretischen Magnetfeld und dem gemessenen Magnetfeld aufweist.

12. Verfahren zur Navigation und/oder Führung und/oder Steuerung nach Anspruch 11, **dadurch gekennzeichnet, dass**, um die Korrektur durchzuführen, mindestens ein programmierter öder gespeicherter Wert des Azimutwinkels $\psi$ und mindestens ein programmierter oder gespeicherter Wert des Neigungswinkels $\theta$ verwendet wird.

13. Vorrichtung, welche es ermöglicht, die Navigation und/oder die Führung und/oder die Steuerung eines Projektils (1) zu gewährleisten, wobei die Vorrichtung mindestens einen Magnetsensor (7) umfasst, welcher die Messung der drei Komponenten ($H_{px},H_{py},H_{pz}$) des Magnetfeldes in einem orthonormierten, an das Projektil (1) gebundenen Koordinatensystem gewährleistet, wobei die Vorrichtung das Verfahren nach einem der vorhergehenden Ansprüche einsetzt und **dadurch gekennzeichnet ist, dass** sie mindestens einen Rechner (5) aufweist, welcher einen Rechenalgorithmus (14) enthält zur Berechnung der Eulerschen Winkel, wobei der Rechner mit Speichermitteln (15) verknüpft ist, welche an Mittel (8) gekoppelt sind, welche vor Abschuss Programmdaten von den gennanten Speichern liefern, wobei die Speichermittel dafür vorgesehen sind, mindestens einen Wert der drei Komponenten eines Bezugsmagnetfeldes ($H_{MB0x},H_{MB0y},H_{MB0z}$) in einem festen terrestrischen Koordinatensystem zu speichern, wobei diese Programmdaten von dem Rechner (5) mit den Messungen des Magnetfeldes auf der Flugbahn verwendet werden, um für mindestens einen Teil (Tn) der Flugbahn (12) mit einem im Wesentlichen konstanten Azimutwinkel ($\psi n$) sämtliche oder einen Teil der Eulerschen Winkel zu bestimmen und es zu ermöglichen, so die Navigation und/oder Führung und/oder die Steuerung des Projektils (1) zu gewährleisten.

**14.** Vorrichtung nach Anspruch 13, **dadurch gekennzeichnet, dass** das Projektil Trägheitsmittel (9) aufweist.

**15.** Vorrichtung nach einem der Ansprüche 13 oder 14, **dadurch gekennzeichnet, dass** der Rechner (5) Mittel (23) enthält, welche es ermöglichen, die Messungen des Magnetfeldes von einem Teil der durch die Umgebung der Sensoren beigetragenen Störungen zu bereinigen.

**Claims**

**1.** A process enabling a projectile (1) to be navigated and/or guided and/or steered towards a target (B), such process wherein a calculation of all or some of the projectile's Euler angles ($\psi$, $\theta$, $\varphi$) is used to enable the determination of the attitude and/or location of the projectile (1) within a terrestrial reference frame, process ***wherein:***

  - before firing, at least one value is programmed into the memory or register of a projectile's (1) computer (5) of the three components ($H_{MB0x}$, $H_{MB0y}$, $H_{MB0z}$) of a reference frame magnetic field in a fixed, direct and orthonormed terrestrial reference frame, such reference frame being centred on the firing position and having a horizontal axis and a vertical axis, the orientation of the reference frame with respect to the target's (B) direction being known and fixed or programmed,
  - at least one azimuth angle ($\psi$) value is built in or programme before firing into another memory or register of the projectile's computer (5),
  - at least one measurement of the three components ($H_{px}$, $H_{py}$, $H_{pz}$) of the magnetic field is made during the trajectory in an orthonormed reference frame linked to the projectile (1),
  - the roll angle $\varphi$ and/or attitude angle $\theta$ is calculated during the trajectory from the values of the magnetic field measured, the value or values of the reference frame field and the azimuth angle value memorised for that part of the trajectory under consideration.

**2.** A navigation and/or guidance and/or steering process according to Claim 1, wherein the fixed terrestrial reference frame is selected centred on the firing position O and has a horizontal axis $OX_{MB0}$ oriented in the direction of the target (B).

**3.** A navigation and/or guidance and/or steering process according to one of Claims 1 or 2, wherein the value of the reference frame magnetic field ($H_{MB0x}$, $H_{MB0y}$, $H_{MB0z}$) is measured before firing at the firing position O and memorised, the calculation of the angle or angles being thereafter made from this measurement.

**4.** A navigation and/or guidance and/or steering process according to Claim 3, wherein the attitude angle $\theta$ is calculated from at least one measurement of the component $H_{PX}$ of the magnetic field along axis $X_P$ of the projectile, using the following formula:

$$H_{PX} - b\cos\theta - c\sin\theta = 0,$$

formula in which
b and c are coefficients which are functions of the components $H_{MBOX}$, $H_{MBOY}$ and $H_{MBOZ}$ of the reference frame magnetic field in the fixed terrestrial reference frame such as programmed before firing and $\psi_n$ being a value of the azimuth angle known for the part (Tn) of the trajectory (12) under consideration.

**5.** A navigation and/or guidance and/or steering process according to Claim 4, wherein the roll angle $\varphi$ is calculated from the attitude angle and by using at least one measurement of components $H_{PY}$ and $H_{PZ}$ of the magnetic field along axes $Y_P$ and $Z_P$ of the projectile by the following formula:

$$\tan(\varphi) = \frac{H_{PY}.e - H_{PZ}.d}{H_{PY}.d + H_{PZ}.e}$$

formula in which
d and e are coefficient functions of components $H_{MB0X}$, $H_{MB0Y}$ and $H_{MB0Z}$ of the reference frame magnetic field in the fixed terrestrial reference frame such as programmed before firing and the coefficients of a matrix M ($\theta$, $\psi$) of partial passage of the fixed terrestrial reference frame to the reference frame linked to the projectile (1), and where only the azimuth $\psi$ and attitude angles $\theta$ are integrated.

6. A navigation and/or guidance and/or steering process according to Claim 5, wherein after calculation of the roll angle $\varphi$ a linearization of its value is performed.

7. A navigation and/or guidance and/or steering process according to one of Claims 4 to 6, wherein for a ballistic flight phase, the azimuth angle $\psi_n = \psi_1$ is memorised or programmed before firing and will correspond to the azimuth angle given to the projectile (1) when fired.

8. A navigation and/or guidance and/or steering process according to one of Claims 4 to 6, wherein for a steered flight phase, the azimuth angle $\psi_n$ adopted for the part (Tn) of the trajectory (12) under consideration is a value memorised before firing and incorporated into a firing table (16) which is read in relation with a timer (17) counted down from the instant of firing.

9. A navigation and/or guidance and/or steering process according to one of Claims 4 to 6, wherein for a steered flight phase, the azimuth angle $\psi_n$ adopted for the part of the trajectory under consideration is a value which is calculated during the trajectory on the basis of the projectile's aerodynamic coefficients, at least one measurement of the acceleration and at least one memorised or programmed azimuth angle value.

10. A navigation and/or guidance and/or steering process according to one of Claims 1 to 9, wherein the projectile's (1) instantaneous spin vector $\vec{\Omega}$ components are evaluated in a reference frame linked to the projectile from the calculated Euler angle values and their derivatives as a function of time.

11. A navigation and/or guidance and/or steering process according to one of Claims 1 to 10, wherein, so as to correct the measurements of the magnetic field from part of the disturbances caused by the environment of the sensors (7), at least one correction is made during a phase which has a stable azimuth angle $\psi$, such correction comprising a measurement of the deviation between the theoretical magnetic field and the measured magnetic field.

12. A navigation and/or guidance and/or steering process according to Claim 11, wherein, to perform such correction, at least one programmed or memorised value of the azimuth angle $\psi$ is used as well as at least one programmed or measured value of the attitude angle $\theta$.

13. A device to ensure the navigation and/or guidance and/or steering of a projectile (1), such device incorporating at least one magnetic sensor (7) ensuring the measurement of the three components ($H_{px}$, $H_{py}$, $H_{pz}$) of the magnetic field in an orthonormed reference frame linked to the projectile (1), device implementing the process according one of the preceding claims and *wherein* it comprises at least one computer (5) incorporating an algorithm (14) to calculate the Euler angles, such computer associated with memory means (15) coupled with means (8) supplying programming data before firing for said memories, the memory means being intended to store at least one value of the three components of a reference frame magnetic field ($H_{MB0x}$, $H_{MB0y}$, $H_{MB0z}$) in a fixed terrestrial reference frame, this programming data being used by the computer (5) with the measurements of the magnetic field during the trajectory to determine, for at least part (Tn) of the trajectory (12) having a substantially constant azimuth angle ($\psi$n), all or part of the Euler angles thereby enabling the navigation and/or guidance and/or steering of the projectile (1) to be ensured.

14. A device according to Claim 13, wherein the projectile incorporates inertial means (9).

15. A device according to one of Claims 13 or 14, wherein the computer (5) incorporates means (23) enabling the measurements of the magnetic field of part of the disturbances caused by the environment of the sensors to be corrected.

Fig. 1

Fig. 2

**Fig. 3**

Fig. 4

**Fig. 5a**

**Fig. 5b**

**Fig. 6**

**EP 1 798 622 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050040280 A
- US 6573486 B
- FR 2846080
- FR 2860577
- FR 2703412
- DE 3843476